Europäisches Patentamt

(19) European Patent Office

Office européen des brevets

(11) Veröffentlichungsnummer: **0 147 368**

**A2**

(12) # EUROPÄISCHE PATENTANMELDUNG

(21) Anmeldenummer: 84810612.6

(22) Anmeldetag: 13.12.84

(51) Int. Cl.⁴: **G 03 B 27/06**
**G 03 B 27/52**

(30) Priorität: 19.12.83 CH 6740/83

(43) Veröffentlichungstag der Anmeldung:
03.07.85 Patentblatt 85/27

(84) Benannte Vertragsstaaten:
CH DE FR GB IT LI NL SE

(71) Anmelder: Smrcka, Pavel
Muristrasse 64
CH-3006 Bern(CH)

(72) Erfinder: Smrcka, Pavel
Muristrasse 64
CH-3006 Bern(CH)

(74) Vertreter: Steiner, Martin et al,
c/o AMMANN PATENTANWAELTE AG BERN
Schwarztorstrasse 31
CH-3001 Bern(CH)

(54) **Gerät zur Kennzeichnung der in einer Repetierkopiermaschine belichteten Kopien.**

(57) Das Gerät weist einen auf den Kopierrahmen (3) der Kopiermaschine aufsetzbaren Projektor (20-22) auf, der Vorlagen von Kennzeichen von einem Film (23) auf das lichtempfindliche Material (2) projiziert. Eine automatisch gesteuerte Fortschaltvorrichtung sorgt für den schrittweisen Transport des Filmes (23), um einzelnen belichteten Kopien zugeordnete Kennzeichen zu projizieren. Das Gerät ist einfach aufgebaut, einfach zu montieren und es arbeitet vollautomatisch.

FIG.3

EP 0 147 368 A2

Croydon Printing Company Ltd.

Gerät zur Kennzeichnung der in einer Repetierkopiermaschine belichteten Kopien

Die vorliegende Erfindung betrifft ein Gerät zur Kennzeichnung der in einer Repetierkopiermaschine belichteten Kopien eines an einem über dem lichtempfindlichen Material einstellbaren Träger angebrachten Originals. Dem Gerät kommt die Aufgabe zu, den einzelnen Kopien oder Nutzen auf einer Druckplatte oder einem anderen lichtempfindlichen Material eine besondere Kennzeichnung, beispielsweise eine Nummer, einen Buchstaben, ein Symbol, eine Marke oder dergleichen zuzuordnen. Bekannte, diesem Zweck dienende Geräte sind aufwendig und umständlich in der Bedienung. Ziel vorliegender Erfindung ist es, ein einfaches, automatisch arbeitendes Gerät zur sauberen, zuverlässigen Kennzeichnung der in einer Repetierkopiermaschine belichteten Kopien zu schaffen. Dieses Ziel wird gemäss kennzeichnendem Teil des Anspruchs 1 erreicht. Vorzugsweise wird dieses Gerät im Negativverfahren eingesetzt, indem bei diesem Verfahren keine Nachteile durch Schattenwurf des Gerätes entstehen.

Die Erfindung wird nun anhand von Ausführungsbeispielen des Gerätes näher erläutert.

Fig. 1 zeigt die für das Verständnis der Erfindung wesentlichen Teile der Repetierkopiermaschine mit dem Gerät in einer Vorbereitungsstellung,

Fig. 2 ist eine perspektivische Darstellung des Gerätes in der Stellung gemäss Fig. 1,

Fig. 3 ist eine Seitenansicht des Gerätes in der Betriebsstellung mit eingesetztem Projektor und in etwas grösserem Massstab,

Fig. 4 zeigt schematisch eine weitere Ausführungsform des Gerätes,

Fig. 5 zeigt schematisch eine dritte Ausführungsform des Gerätes und

Fig. 6 und 7 zeigen je eine weitere Ausführungsform des Gerätes.

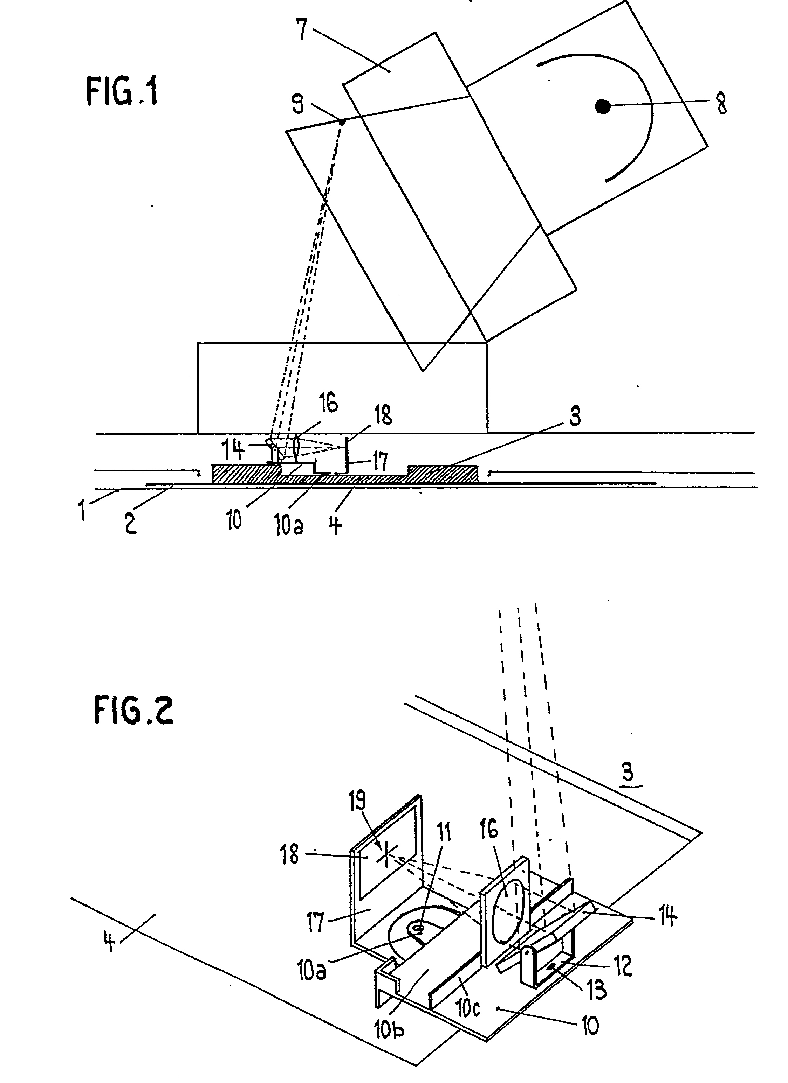

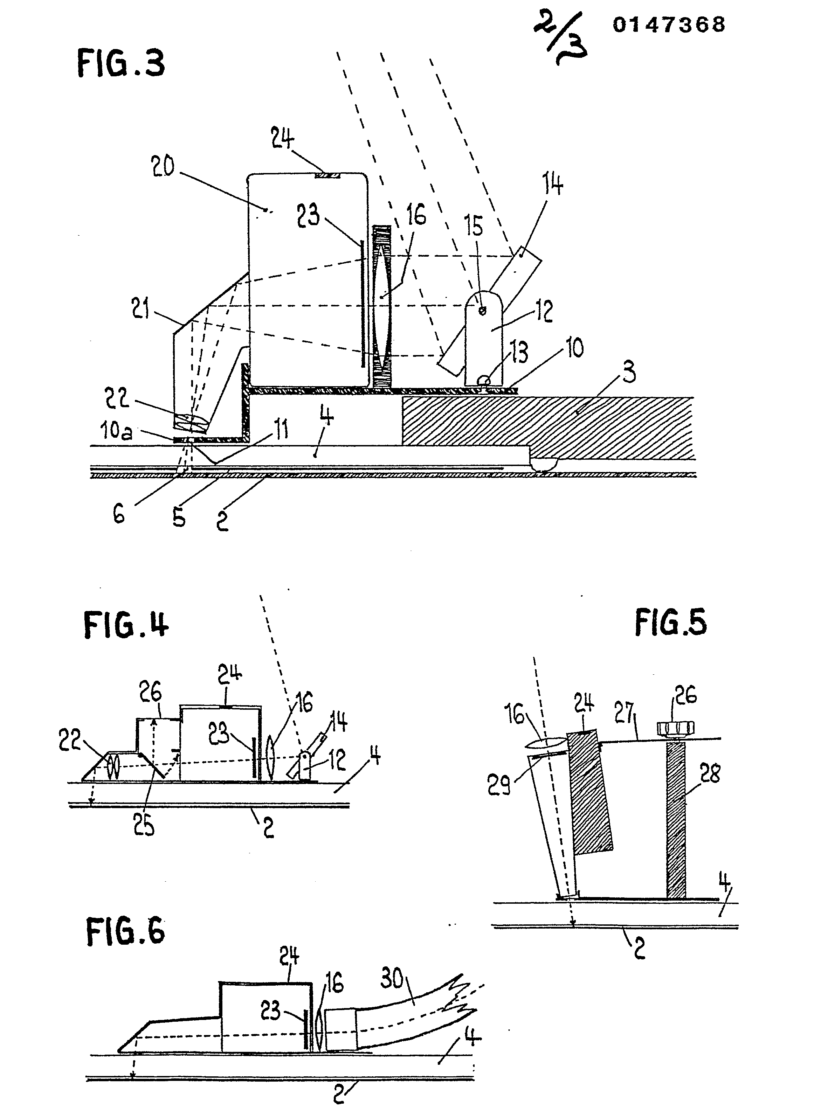

In Fig. 1 ist die Tischfläche 1 der Repetierkopiermaschine angedeutet, auf der das zu belichtende lichtempfindliche Material 2, beispielsweise eine Druckplatte liegt. Auf dieser Druckplatte 2 liegt der Kopierrahmen 3 der Maschine auf, der gemäss Fig. 3 einen eigentlichen Rahmen 3 mit einer Oeffnung und einer in die Oeffnung eingelegten Glasscheibe 4 aufweist. Auf diese Glasscheibe 4 ist ein nur in Fig. 3 dargestellter Negativ-Film 5 aufgebracht. An geeigneter Stelle bezüglich der Originaldarstellung des zu kopierenden Bildes auf diesem Film ist ein kleines Feld 6 ausgespart oder ausgeschnitten, durch welches in der nachfolgend beschriebenen Weise die Kennzeichnung der jeweiligen Kopien erfolgt. Die Kopiermaschine weist über dem Kopierrahmen eine Belichtungskammer auf, die einen Unterteil und eine aufklappbare Haube 7 mit der eigentlichen Kopierbeleuchtung 8 mit Reflektor aufweist. Die Haube kann in die in Fig. 1 dargestellte, eindeutig bestimmte Offenlage aufgeklappt werden. Sie ist an der Innenseite mit einer Hilfsbeleuchtung 9 versehen, die sich bei aufgeklappter Haube gemäss Fig. 1 genau an derselben Stelle befindet, an welcher sich bei geschlossener Haube die Kopierbeleuchtung 8 befindet. Der Zweck dieser Hilfsbeleuchtung wird später noch erläutert.

Das eigentliche Kennzeichnungsgerät weist einen Träger 10 aus Flachmaterial auf, der einseitig auf den Rahmen 3 und mit einer nach unten versetzten Zunge 10a auf die Glasscheibe 4 aufliegt. In der Zunge 10a befindet sich eine Oeffnung 11, durch welche in später beschriebener Weise die Kennzeichnungen projiziert werden. An einem U- förmigen Träger 12 der um eine Niete 13 schwenkbar am Träger 10 gelagert ist, ist ein Spiegel 14 um eine Horizontal-Achse 15 schwenkbar angeordnet. Dem Spiegel gegenüber liegt ein Kondensor 16. Wie die Fig. 1 und 2 zeigen, kann an den Träger 10 ein Halter 17 mit einer

- 3 -

0147368

Mattscheibe 18 mit Fadenkreuz 19 in bestimmter Lage angeschoben werden. Die bisher beschriebenen Teile des Gerätes dienen der genauen Einstellung des Spiegels 14. Bei der in den Fig. 1 und 2 dargestellten Position wird der Spiegel 14 solange verstellt, bis die Beleuchtung 9 genau auf das Fadenkreuz 19 abgebildet wird. Damit ist der Spiegel so eingestellt, dass er nachträglich beim Kopieren, d.h. bei geschlossener Haube 7, das Licht der Kopierbeleuchtung 8 korrekt reflektiert, um durch den Kondensor 16 den Projektor optimal zu durchleuchten.

Ist diese Vorbereitung getroffen, wird der Halter 17 mit der Mattscheibe entfernt und es wird der Projektor 20 gemäss Fig. 3 auf den Träger 10 aufgesetzt. Der Träger 10 weist hochstehende Richtwinkel 10b und ein Richtblech 10c auf, welche die Position des Projektors 20 auf dem Träger 1 genau bestimmen. Der Projektor weist in einem Fortsatz einen Umlenkspiegel 21 und das Objektiv 22 auf. Im Projektorgehäuse sind Filmspulen mit einem Film 23 angeordnet. Auf diesem Film befinden sich in bestimmten Abständen Vorlagen von Kennzeichnungen, beispielsweise von Nummern. Es ist eine automatische Schrittschaltvorrichtung vorgesehen, welche den Film schrittweise fortzuschalten gestattet, um nacheinander je einer Kopie zugeordnete Kennzeichen in die optische Achse des Projektors zu bringen. An der Oberseite des Projektorgehäuses 20 ist ein schematisch dargestelltes lichtempfindliches Element, beispielsweise ein Photowiderstand angebracht, welcher in später beschriebener Weise der Impulssteuerung der Schrittschaltvorrichtung des Projektor dient.

Wenn das Gerät gemäss Fig. 3 vorbereitet ist, wird die Haube 7 geschlossen und die Kopierarbeit kann beginnen. In üblicher Weise wird der Kopierrahmen schrittweise über das lichtempfindliche Material 2 verschoben, um an bestimmten Stellen Kopien des Originals zu beleuchten. Zu diesem Zwecke wird jeweils die sehr starke Kopierbeleuchtung 8 eingeschaltet. Ueber den Spiegel 14 und den Kondensor 16 durchleuchtet diese Beleuchtung auch den Film 23, womit die Vorlage des Kennzeichens, beispielsweise einer Nummer, über den Spiegel 21 und durch das Objektiv 22 verkleinert scharf auf die lichtempfindliche Unterlage 2 abgebildet wird. Beim Ausschalten der Kopierbeleuchtung 8 wird die Fortschaltvorrichtung über das Element 24 betätigt und schaltet den Film 23 in die nächste Position. Zugleich fährt auch der Kopierrahmen 3 in die nächste Position, worauf die Beleuchtung 8 wieder eingeschaltet und ein weiteres Original auf die Unterlage 2 kopiert und zugleich mit seiner Kennzeichnung versehen wird.

Es sind verschiedenste Varianten des Gerätes möglich. Anstelle der Oeffnung 11 in der Zunge 10a des Trägers 10 könnte auf einem durchsichtigen Teil ein Fadenkreuz angebracht sein, welches die genaue Einstellung des Trägers 10 und damit des Projektors auf die Aussparung oder Lücke 6 im Negativ-Film 5 erlaubt. Während das oben beschriebene Gerät den Vorteil aufweist, die ohnehin vorhandene Kopierbeleuchtung zum Projizieren der Kennzeichen zu benutzen, könnte gegebenenfalls auch eine besondere Beleuchtung, z.B. Blitzbeleuchtung für den Projektor vorgesehen sein, die zusammen mit der Kopierbeleuchtung eingeschaltet wird. Es kann eine akustische Kontrolle für die Fortschaltung des Filmes 23 vorgesehen sein, welche drahtlos oder über eine Drahtverbindung ein ausserhalb der Haube 7 angeordnetes Kontrollgerät steuert.

In Fig. 4 ist ein weiteres Ausführungsbeispiel rein schematisch dargestellt, wobei entsprechende Teile gleich bezeichnet sind wie dem in Fig. 1 bis 3. Das Projektorgehäuse 20 entspricht etwa demjenigen nach Fig. 1, in diesem Falle ist jedoch die Optik liegend angeordnet, d.h., das Objektiv 22 liegt vor einem Umlenkspiegel 21a, über welchen die Kennzeichen auf das lichtempfindliche Material projiziert werden. Im Projektorgehäuse befindet sich ein hochklappbarer Spiegel 25, über welchem sich eine Mattscheibe mit Fadenkreuz 26 befindet. Bei heruntergeklapptem Spiegel 25 dient diese Vorrichtung der oben beschriebenen Einstellung des Spiegels 4 mit Hilfe der Hilfsbeleuchtung 9.

In Fig. 5 ist ein weiteres Ausführungsbeispiel schematisch dargestellt, bei welchem wiederum entsprechende Teile gleich bezeichnet sind wie in den Fig. 1 bis 3. Dieses Ausführungsbeispiel unterscheidet sich von den vorhergehenden im wesentlichen dadurch, dass auf einen Beleuchtungsspiegel 14 verzichtet wird, indem die Beleuchtungsachse des Projektors direkt auf die Kopierbeleuchtung der Kopiermaschine ausgerichtet ist. Die Einstellung bzw. Ausrichtung des Gerätes kann bei gelöster Handschraube 26 durch Verschieben des Halters 27 gegenüber einer Stütze 28 erfolgen. Anstelle eines Filmes ist hier ein elektrooptischer Träger 29 vorgesehen, auf welchem das zu projizierende Kennzeichen z.B. durch Aktivieren von Punkten, Strichen oder dergleichen Elementen gebildet werden kann. Die Informationen zur Aktivierung der Kennzeichen können vollautomatisch einem elektronischen Speicher entnommen werden.

Fig. 6 zeigt schematisch eine Ausführungsvariante, die derjenigen nach Fig. 4 entspricht mit dem Unterschied, dass die Durchleuchtung des Projektors nicht über einen Spiegel 14, sondern durch einen flexiblen Lichtleiter bzw. ein Lichtkabel 30, entweder von der bestehenden Kopierbeleuchtung 8 oder von einer besonderen Lichtquelle her erfolgt. Eine Ueberprüfung der Einstellung mittels Spiegel 25 und Mattscheibe 26 ist in diesem Falle nicht mehr erforderlich.

Unter Kennzeichnung bzw. kennzeichnendem Symbol im Sinne der Erfindung sind beliebige Zeichen zu verstehen, z.B. Schnittzeichen, Faltzeichen, Stanzzeichen, Anlagezeichen, Passkreuze, Flattermarken, fortlaufende Seitennummerierungen oder dergleichen, wobei zum Anbringen bestimmter Zeichen an bestimmten Stellen jeweils eine entsprechende Einstellung der Maschine erforderlich sein kann.

Es ist oben die Möglichkeit erwähnt, Kennzeichen nach gespeicherten Programmen elektrooptisch zu aktivieren und zu projizieren. Entsprechend könnte auch der Film 23 oder ein entsprechender Symbolträger mittels Schrittmotor und entsprechender Steuerung jeweils eingestellt werden, um die vorhandenen Symbole in ganz bestimmten Reihenfolgen zur Projektion zu bringen. Das erlaubt grössere Freiheit in der Reihenfolge, in welcher die Nutzen des lichtempfindlichen Materials belichtet werden.

Bisher ist angenommen, das Gerät werde lose auf den Rahmen der Kopiermaschine gelegt und in die gewünschte Stellung ausgerichtet. Das kann als mühsam empfunden werden, weil die Haube 7 auch in geöffnetem Zustand das Anbringen und Einstellen des Gerätes etwas behindert. Das Gerät kann daher auch einstellbar auf einem Zwischenträger montiert sein, welcher Zwischenträger seinerseits in mindestens einer bestimmten Position mit dem Rahmen 3 der Kopiermaschine verbunden werden kann. Es ist in diesem Falle möglich, das Gerät auf seinem Zwischenträger vor dem Einsetzen in die Maschine genau zu positionieren, wonach der Zwischenträger in vorbestimmter Lage auf den Rahmen 3 aufgesetzt wird. Es ist dabei keine Feineinstellung des Gerätes in der Kopiermaschine erforderlich.

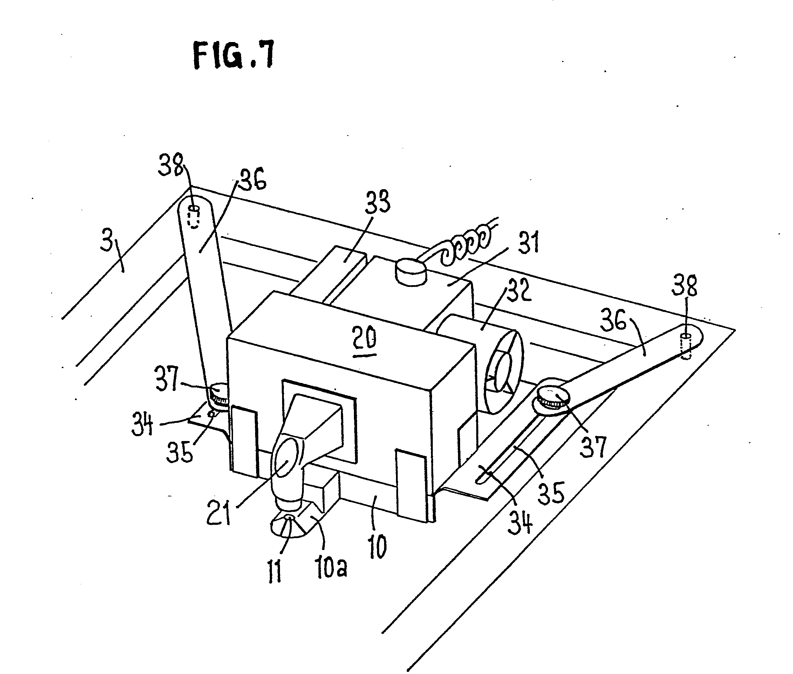

Fig. 7 zeigt eine Ausführungsform, bei welcher die vorgenannten Bedingungen erfüllt sind. Entsprechende Teile sind gleich gezeichnet wie in Fig. 3. Am Projektorgehäuse ist jedoch hinten ein Beleuchtungsgehäuse 31 mit einer eigenen Beleuchtung für den Projektor und einen Ventilator 32 angebaut. Es ist ferner eine Steuerung 33 für die Projektorbeleuchtung 31 vorgesehen, wobei u.a. eine Ueberwachung in der Weise vorgesehen ist, dass bei Ausfall der Beleuchtung ein Alarm ertönt und/oder aufleuchtet. Der Träger 10 weist zwei seitliche Flansche 34 mit je einem Längsschlitz 35 auf. Mit den beiden Flanschen 34 ist je ein Montagearm 36 geeigneter Länge mittels je einer Schraube 37 mit Rändelkopf verbunden. Das äussere Ende jedes Montagearms 36 ist mit einem nach unten ragenden Stift 38 versehen, der spielarm in ein Loch des Rahmens 3 greift. Der Projektor ist damit in bestimmter Lage bezüglich des Rahmens gehalten. Diese Lage ist vor dem Einbau voreinstellbar, indem bei gelösten Schrauben 37 die Angriffsstellen der Montagearme 36 an den Flanschen 34 voreingestellt und dann die Schrauben festgezogen werden. Diese Voreinstellung kann ausserhalb der Haube der Kopiermaschine auf einem gleichartigen Rahmen mit gleicher Lochung erfolgen. Dabei können beliebig viele Löcher zum Einsetzen der Stifte 38 in mehreren verschiedenen bestimmten Positionen vorhanden sein. Nach erfolgter Voreinstellung ausserhalb der Kopiermaschine erfolgt das Einsetzen in die dargestellte Betriebsposition ohne weitere Einstellarbeit. Wie Fig. 7 zeigt, sind zwei verschieden lange Montagearme 36 vorgesehen. Es können noch mehr Montagearme unterschiedlicher Länge vorhanden sein, um den Projektor in jeder beliebigen Lage bezüglich des Rahmens 3 montieren zu können.

In allen Fällen ist es wichtig, einen möglichst grossen Anteil des Gerätes ausserhalb des lichtempfindlichen Materials, über dem Rahmen 3, anzubringen, um eine entsprechend geringe Fläche dieses Materials abzudecken. Es ist daher vorteilhaft, den Strahlengang im Gerät über dem Rahmen im wesentlichen horizontal, parallel zur Rahmenebene, zu führen und über dem lichtempfindlichen Material durch einen Umlenkspiegel 21 umzulenken.

Von besonderer praktischer Wichtigkeit ist in allen Fällen auch die simultane Beleuchtung der Kopien und der

0147368

Kennzeichen.

Die Erfindung betrifft auch eine vorteilhafte Verwendung des erfindungsgemässen Projektors unabhängig von einer Kopiermaschine zum nachträglichen, manuellen Aufbringen von Kennzeichen auf schon in beliebiger Weise kopierte Druckvorlagen, Druckplatten und dergleichen.

Patentansprüche:

1. Gerät zur Kennzeichnung der in einer Repetierkopiermaschine belichteten Kopien eines an einem über dem lichtempfindlichen Material (2) einstellbaren Träger (3, 4) angebrachten Originals, gekennzeichnet durch einen Projektor (20-22) zur Projektion einer Vorlage je eines jeder Kopie zugeordneten kennzeichnenden Symbols auf das Material (2), und durch Mittel zum Wechseln der Symbol-Vorlagen im Projektor.

2. Gerät nach Anspruch 1, dadurch gekennzeichnet, dass die Symbol-Vorlagen, z.B. Zahlen, Buchstaben oder dergleichen, auf einem fortschaltbaren Film (23) oder dergleichen Symbolträger angebracht sind, der programmgesteuert in beliebige Stellungen bringbar ist.

3. Gerät nach Anspruch 1 oder 2, dadurch gekennzeichnet, dass der Projektor ohne eigene Lichtquelle durch die Beleuchtung (8) der Kopiermaschine ausleuchtbar ist.

4. Gerät nach Anspruch 3, dadurch gekennzeichnet, dass ein einstellbarer Umlenkspiegel (14) für die Beleuchtung vorgesehen ist.

5. Gerät nach Anspruch 3 oder 4, dadurch gekennzeichnet, dass wahlweise eine Mattscheibe (18) als Einstellhilfe für den Spiegel (14) und ein Projektonsgehäuse (20) mit den Vorlagen (23) und dem Objektiv (22) einsetzbar sind.

6. Gerät nach Anspruch 5, dadurch gekennzeichnet, dass in der Haube (7) der Kopiermaschine eine Hilfsbeleuchtung (9) angebracht ist, die sich bei offener Haube an derselben Stelle befindet wie die Kopierbeleuchtung (8) bei geschlossener Haube.

7. Gerät nach einem der Ansprüche 1 - 6, gekennzeichnet

0147368

durch eine durch die Kopierbeleuchtung opto-elektrisch auslösbare Fortschaltvorrichtung für die Symbol-Vorlagen (23).

8. Gerät nach einem der Ansprüche 1 - 7, dadurch gekennzeichnet, dass der Projektor ein Fadenkreuz, eine Oeffnung (11) oder dergleichen zur Einstellung auf eine bestimmte Stelle bezüglich des Originals aufweist.

9. Gerät nach einem der Ansprüche 1 - 8, dadurch gekennzeichnet, dass es auf den Kopierrahmen (3) der Kopiermaschine aufsetzbar ist, und dass der Projektor einen Umlenkspiegel (21) zwischen der Vorlage (23) und dem lichtempfindlichen Material (2) aufweist.

10. Gerät nach einem der Ansprüche 1 - 9, dadurch gekennzeichnet, dass es einstellbar mittels in mindestens einer bestimmten Lage mit dem Träger (3, 4) verbindbaren Montagemitteln (36) verbunden ist bezüglich des Trägers positioniert ist.

FIG.1

FIG.2

0147368

FIG.3

FIG.4

FIG.5

FIG.6

FIG.7